(19) Europäisches Patentamt
European Patent Office
Office européen des brevets

(11) **EP 2 154 218 A2**

(12) **EUROPÄISCHE PATENTANMELDUNG**

(43) Veröffentlichungstag:
**17.02.2010 Patentblatt 2010/07**

(51) Int Cl.:
*C09J 7/02* (2006.01)      *B32B 3/28* (2006.01)
*B32B 38/12* (2006.01)

(21) Anmeldenummer: **09166683.4**

(22) Anmeldetag: **29.07.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **09.08.2008   DE 102008035474**

(71) Anmelder: **TESA SE**
**20253 Hamburg (DE)**

(72) Erfinder: **Böhm, Nicolai**
**22559 Hamburg (DE)**

(54) **Selbstklebende Luftpolsterfolie als Schutz für frische Lacke bei der Fahrzeugmontage und Verfahren zur Herstellung**

(57)   Selbstklebende Luftpolsterfolie insbesondere zum temporären Schutz von frischen Lackoberflächen von Fahrzeugen wie Automobilen und frisch lackierten Fahrzeugteilen mit einem ersten Trägerfilm, auf dessen erste Seite eine Außenfolie aus Polypropylen, polypropylendominierten Polyolefinblends oder propylendominierten Olefincopolymeren aufgebracht ist und auf dessen zweite, der ersten entgegengesetzte Seite ein Noppen bildender zweiter Trägerfilm vorhanden ist, wobei die Noppen insbesondere mit Luft gefüllt sind, auf die Noppen zumindest partiell eine Folie aus Polyethylen unlösbar aufgebracht und auf der Folie eine Selbstklebeschicht aufgebracht ist.

FIG.1

**Beschreibung**

Die Erfindung betrifft eine selbstklebende Luftpolsterfolie als Schutz für frische Lacke bei der Fahrzeugmontage, Verfahren zur Herstellung und Verwendungsmöglichkeiten derselben.

Selbstklebende Luftpolsterfolien als Verpackungsmittel für empfindliche Güter sind an sich bekannt. Eine besonders bevorzugte Qualität, die sich durch Langlebigkeit der Luftpolster und außerdem durch eine rückseitige Abdeckungsfolie für die Luftpolster auszeichnet, so dass die Trägerfolie zwischen den Polstern nicht ohne Polsterwirkung bleibt, ist unter dem Markennamen AirCap® der Firma Sealed Air bekannt. Diese Luftpolsterfolie zeichnet sich dadurch aus, dass ein dreischichtiger Aufbau der Folie aus Polyethylen/Sperrschicht/Polyethylen ein Austritt von Luft aus den einzelnen Noppen der Folie verhindert.

Selbstklebend ausgerüstete Luftpolsterfolien auf frisch lackierten Karossen in der Fahrzeug-, insbesondere der Pkw-Herstellung anzuwenden, birgt das Risiko, dass die Lacke, die unmittelbar nach ihrer Trocknung noch nicht ihre Endhärte erreicht haben, sich unter der Klebmasse der selbstklebenden Luftpolsterfolie irreversibel verformen und/oder verfärben.

Selbstklebende Folien, die auf frisch lackierte Karosserien zu kleben sind und die durch die gesamte Montage des Fahrzeugs und den gesamten Transportweg bis zum Händler, der das Fahrzeug gegebenenfalls nach einiger Zeit der Lagerung für die Ausstellung beziehungsweise die Übergabe an den Käufer vorbereitet, auf dem Lack verbleiben dürfen, ohne irreversible Lackverformungen oder -verfärbungen hervorzurufen, sind an sich bekannt. Eine bevorzugte Ausführungsform wird von der tesa AG hergestellt und unter dem Markennamen tesa® Bodyguard vertrieben.

Beispielsweise sei eine Lackschutzfolie auf Basis einer Selbstklebemasse aus Polyethylenvinylacetat (EVA) erwähnt, die in DE 195 32 220 A1 beschrieben ist. Dieses System erreicht bereits nach kurzer Zeit gute Verklebungswerte und gewährleistet eine große Verklebungssicherheit gegen unerwünschtes selbsttätiges Ablösen während des Transportes. Als nachteilig wird vom Anwender mitunter das starke Aufziehen empfunden, das mit einer Mischung verschiedener Copolymere des EVAs wie in DE 100 50 499 A1 beschrieben gemildert werden kann.

Derartige selbstklebende Schutzfolien haben aber für die Praxis der Fahrzeugmontage häufig zu wenig Schutzwirkung gegen mechanische Einwirkungen und sie werden häufig unter selbstklebende Luftpolsterfolien, Hartschalen, Polsterdecken geklebt, um deren Einwirkung auf den frischen Lack zu vermeiden. Das bedeutet zusätzliche Arbeitsschritte und damit Kosten in der Fahrzeugherstellung sowohl bei der Applikation als auch bei der Entfernung der Montageschutzmaßnahmen.

Ein selbstklebender Schutzartikel mit Polsterwirkung für den Einsatz auf Automobillacken ist in der US 6,093,466 B beschrieben. Eine der Möglichkeiten zur Erreichung der Polsterwirkung sind Luftpolster. Wegen der Limitierung, dass die oberste Folienschicht sowohl die darunter liegende gepolsterte Schicht als auch die ganz unten angeordnete selbstklebende Basisfolie seitlich überragen muss, ist dieser Artikel nur in sehr aufwändiger und teurer Weise herzustellen.

In der DE 10 2004 036 417 A1 ist eine selbstklebende Luftpolsterfolie offenbart, die die hervorragende mechanische Schutzwirkung der Luftpolsterfolie mit der guten Lackverträglichkeit der dort aufgeführten Selbstklebemassen kombiniert. Eine der dort beschriebenen Ausführungsformen nutzt Polyethylenvinylacetat mit einem Vinylacetatgehalt von 40 Gew.-% bis 80 Gew.-% als lackverträgliche Selbstklebmasse. Tatsächlich genügt dieser Produktaufbau höchsten Ansprüchen an Schutzwirkung und Lackverträglichkeit.

Die Luftpolsterfolie besteht aus einem ersten Trägerfilm, auf dem ein Noppen bildender zweiter Trägerfilm vorhanden ist, wobei die Noppen insbesondere mit Luft gefüllt sind, auf die Noppen zumindest partiell eine Folie aus Polyethylen unlösbar aufgebracht und auf der Folie die Selbstklebeschicht aufgebracht ist. Gemäß der DE 10 2004 036 417 A1 kann der erste Trägerfilm, auf den die Klebmasse zu liegen kommt, wenn das Produkt zu einer Rolle aufgewickelt wird, aus Polyethylen, Polypropylen sowie deren Mischungen oder Copolymeren bestehen. Es stellt sich heraus, dass bei Verwendung von Polyethylen, vorwiegend Polyethylen enthaltenden Mischungen mit Polypropylen sowie vorwiegend Ethylen enthaltende Copolymere von Ethylen, Propylen oder höheren $\alpha$-Olefinen die Haftung auf der Rückseite so hoch werden kann, dass die Luftpolsternoppen beim Abwickeln zerreißen oder von der Klebefolie lösen, so dass das Produkt zerstört wird. Dieser Effekt ist besonders bei älteren Rollen zu beobachten und nimmt mit zunehmender Abwickellänge zum Rollenkern hin zu, wo durch den Wickeldruck die Klebmasse besonders fest auf die Rückseite gepresst worden ist. Dieser Produktnachteil offenbart sich während der Verarbeitung, nicht in der eigentlichen Funktion des Produkts als Schutzartikel, kann aber gravierend sein, da er die Funktion des Artikels zunichte machen kann. Tatsächlich ist die Ausführung des ersten Trägerfilms als Polypropylenschicht technisch sehr schwierig, da Polypropylen nur unter großen Umständen mit dem zweiten Trägerfilm, der die Noppen bildet und gemäß DE 10 2004 036 417 A1 aus bevorzugt Polyethylen/Sperrschicht/Polyethylen besteht, wegen der unterschiedlichen Schmelzpunkte von Polyethylen und Polypropylen heißgesiegelt werden kann. Deshalb ist ein derartiges Produkt nicht erhältlich.

Aufgabe der Erfindung ist es, eine Luftpolsterfolie und Lackschutzfolie mit einer Selbstklebemasse auf Basis von Polyethylenvinylacetat so zu einem Produkt zu kombinieren, dass dabei ein Abwickeln des zur Rolle gewickelten Produktes mit moderatem Kraftaufwand und ohne Zerstörung oder Ablösung der Noppen möglich ist.

Gelöst wird diese Aufgabe durch eine selbstklebende Luftpolsterfolie, wie sie gemäß Hauptanspruch beschrieben ist. Gegenstand der Unteransprüche sind besonders vorteilhafte Ausführungsformen des Erfindungsgegenstands sowie besonders vorteilhafte Verwendungen und Herstellungsverfahren der erfindungsgemäßen Luftpolsterfolie.

Demgemäß betrifft die Erfindung eine selbstklebende Luftpolsterfolie insbesondere zum temporären Schutz von frischen Lackoberflächen von Fahrzeugen wie Automobilen und frisch lackierten Fahrzeugteilen mit einem ersten Trägerfilm, auf dessen erste Seite eine Außenfolie aus Polypropylen, polypropylendominierten Polyolefinblends oder propylendominierten Olefincopolymeren aufgebracht ist und auf dessen zweite, der ersten entgegengesetzte Seite ein Noppen bildender zweiter Trägerfilm vorhanden ist, wobei die Noppen insbesondere mit Luft gefüllt sind, auf die Noppen zumindest partiell eine Folie aus Polyethylen unlösbar aufgebracht und auf der Folie eine Selbstklebeschicht aus Polyethylenvinylacetat befindlich ist.

Überraschend wurde festgestellt, dass Polypropylen, polypropylendominierte Polyolefinblends und propylendominierte Olefincopolymere in Kombination mit Polyethylenvinylacetatselbstklebmassen eine moderate Abrollkraft erzielen und dadurch beim Abrollen der zu einer archimedischen Spirale gewickelten Luftpolsterfolie ein Zerreißen der Luftpolsternoppen weitgehend vermieden wird. Das ist insbesondere überraschend, da gemäß DE 10 2007 009 753 A1 gerade Polyethylen zur Verbesserung der Abrollkraft von Klebebändern mit EVA-Masse offenbart wird. Zwar schließt die DE 10 2004 036 417 A1 wortwörtlich auch Polypropylen als Rückseitenmaterial nicht aus, eine vorteilhafte Verwendung insbesondere zur Erzielung einer geringeren Abrollkraft ist hingegen nicht erkannt worden, liegt dem Fachmann darüber hinaus auch nicht nahe.

In einer ersten vorteilhaften Ausführungsform der Erfindung weist die Außenfolie aus Polypropylen eine der ersten Trägerschicht zugewandte Siegelschicht aus Polyethylen oder modifiziertem Polyethylen auf.
Bei dieser Ausführungsform muss, wenn diese Siegelschicht auf die erste Trennfolie aufgeschweißt werden soll, die erste Trennfolie aus Polyethylen oder Polyethylencopolymeren bestehen.

Der erste Trägerfilm besteht aus Polyolefinen, insbesondere Polyethylen, vorwiegend Polyethylen enthaltenden Mischungen mit Polypropylen oder vorwiegend Ethylen enthaltende Copolymere von Ethylen und Propylen.

Des Weiteren können vorzugsweise die Außenfolie, der erste Trägerfilm, der zweite Trägerfilm und/oder die Folie mindestens ein Lichtschutzmittel in einer Menge von mindestens 0,15 Gew.-% und/oder Titandioxid, vorzugsweise in einer Menge von 5 bis 15 Gew.-%, enthalten.

In einer vorteilhaften Ausführungsform weist der erste und/oder der zweite Trägerfilm einen dreischichtigen Aufbau aus Polyethylenfolie/Sperrschicht/Polyethylenfolie auf.
Weiterhin vorteilhafterweise ist zwischen der Folie und der Kleberschicht eine Haftvermittlerschicht vorhanden.

Die Selbstklebemasse besteht aus Polyethylenvinylacetat bei einem Vinylacetatgehalt von 40 Gew.-% bis 80 Gew.-%, insbesondere 70 Gew.-%, und mit einem Verlustwinkel tan δ von 0,6 bis 1,0, gemessen bei einer Temperatur von 60 °C und einer Frequenz von $10^{-2}$ Hz, und von 0,4 bis 0,7, gemessen bei einer Temperatur von 60 °C und einer Frequenz von 10 Hz, die angestrebten Eigenschaften.

Die Produkteigenschaften wie Anfassklebrigkeit, Glasübergangstemperatur und Scherstabilität lassen sich mit Hilfe einer dynamisch-mechanischen Frequenzmessung gut quantifizieren. Hierbei wird ein schubspannungsgesteuertes Rheometer verwendet.
Die Ergebnisse dieser Meßmethode geben Auskunft über die physikalischen Eigenschaften eines Stoffes durch die Berücksichtigung des viskoelastischen Anteils. Hierbei wird bei einer vorgegebenen Temperatur die Selbstklebemasse zwischen zwei planparallelen Platten mit variablen Frequenzen und geringer Verformung (linear viskoelastischer Bereich) in Schwingungen versetzt. Über eine Aufnahmesteuerung wird computerunterstützt der Quotient (Q = tan δ) zwischen dem Verlustmodul (G" viskoser Anteil) und dem Speichermodul (G' elastischer Anteil) ermittelt. Für das subjektive Empfinden der Anfassklebrigkeit (Tack) wird eine hohe Frequenz gewählt, sowie für die Scherfestigkeit eine niedrige Frequenz.
Ein hoher Zahlenwert bedeutet eine bessere Anfassklebrigkeit und eine schlechtere Scherstabilität.
Der komplexe-dynamische Glasübergangspunkt ist der Übergangspunkt vom amorphen in den viskoelastischen Bereich. Er entspricht dem Maximum der Temperaturfunktion bei vorgegebener Frequenz.

$$Q = \tan \delta = G''/G'$$

Die Selbstklebemasse wird vorzugsweise in Flächengewichten zwischen 3 und 35 g/m², bevorzugt zwischen 8 und 20 g/m² auf die Folie aufgetragen. Die Auftragung kann aus Lösung, zum Beispiel in Toluol oder Toluol/Benzinmischungen, erfolgen, aber auch aus der Schmelze.

Ebenfalls erfindungsgemäß sind Abmischungen von Polyethylenvinylacetat mit Polyethern, wie sie in DE 199 54 700 A1 und DE 103 03 537 A1 dargelegt sind sowie ternäre EVA-Blends, wie in DE 100 50 449 A1 beschrieben.

Die Selbstklebeschicht, wie sie vorstehend beschrieben ist, kann vorteilhaft zusätzlich mit einem oder mehreren Additiven abgemischt sein wie Klebrigmachern, Weichmachern, anorganischen oder organischen Füllstoffen, Pigmenten, Lichtschutzmitteln, vorzugsweise in Form von UV-absorbierenden sterisch gehinderten Aminen (HALS), Alterungsschutzmitteln, vorzugsweise in Form von Lactonen, primären und sekundären Antioxidantien, Vernetzungsmitteln und/oder Vernetzungspromotoren.

Die auf die erste Trägerschicht aufgebrachte Außenfolie besteht aus Polypropylen, worunter Polypropylenhomo- und -copolymere verstanden werden. Die Copolymere können statistisch verteilte oder Blockcopolymere mit Comonomeren wie Ethylen oder anderen α-Olefinen sein. Diese Folie kann auch ein Blend mit anderen Polyolefinen, insbesondere Polyethylen oder Ethylencopolymere mit Comonomeren wie 1-Buten, 1-Hexen, 1-Octen (je nach Anteil und Herstellungsverfahren dann LLDPE, VLDPE oder ULDPE oder Metallocen-PE genannt), aber auch Ethylen-Styrol-Copolymere, Ethylen mit polaren Comonomeren wie Acrylsäure, Alkylacrylaten, Methalkylacrylaten oder Vinylacetat oder gepropfte Copolymere zum Beispiel mit Maleinsäureanhydrid sein. Wichtig ist, dass der Anteil mindestens 50 Gew.-% Polypropylen ist, wenn sie aus einem Blend von Polyolefinen besteht, mindestens 50 Mol-% Propylen ist, wenn es sich um Olefincopolymere handelt, und mindestens 50 Mol-% Propylen ist, wenn es sich um ein Blend aus Olefincopolymeren oder Olefincopolymeren und Olefinhomopolymeren handelt.

Diese Folie ist mit der ersten Trägerschicht durch Kaschierung, Siegelung oder Extrusionsbeschichtung verbunden.

Für die Kaschierung werden lösungsmittelhaltige oder lösungsmittelfreie, insbesondere reaktive Kaschierkleber wie aromatische oder aliphatische Polyurethankleber verwendet.

Ebenfalls geeignet sind alle gängigen Heißschmelz- Dispersions- oder Lösungsmittelkleber, zum Beispiel Polyacrylate, Polyethylenvinylacetat oder epoxidhärtende Systeme. Der Kaschierkleber kann vollflächig oder partiell, insbesondere punkt- oder streifenförmig, aufgetragen sein.

In diesem Fall sind die zu kaschierenden Polyolefinseiten durch geeignete Verfahren wie Coronaentladung, Fluorierung, Beflammung, Plasmabeschichtung oder Primerung zum Beispiel mit chlorierten Polyolefinen vorteilhafterweise vorbehandelt und dadurch haftungsverbessert.

Zwischen der Außenfolie aus Polypropylen und der Siegelschicht können eine oder mehrere weitere Folien aufgebracht sein, insbesondere hergestellt durch Coextrusion. Bevorzugt wird die Folie mittels einer Siegelschicht aus Polyethylen mit der ersten Trägerschicht durch Schweißen verbunden, wobei weiter bevorzugt die Außenfolie und die Siegelschicht coextrudiert sind, wobei die der ersten Trägerschicht abgewandte Seite die Polypropylenschicht ist und die der ersten Trägerschicht zugewandte Seite aus Polyethylen besteht. Neben reinem Polyethylen (insbesondere Hochdruck-Polyethylen oder LDPE) sind Ethylencopolymere mit Comonomeren wie 1-Buten, 1-Hexen, 1-Octen (je nach Anteil und Herstellungsverfahren dann LLDPE, VLDPE oder ULDPE oder Metallocen-PE genannt), aber auch Ethylen-Styrol-Copolymere, Ethylen mit polaren Comonomeren wie Acrylsäure, Alkylacrylaten, Methalkylacrylaten oder Vinylacetat oder gepropfte Copolymere zum Beispiel mit Maleinsäureanhydrid zur Heißsiegelung mit der ersten Trägerschicht geeignet.

Zwischen Polypropylenschicht und der Polyethylensiegelschicht können noch weitere Schichten angeordnet sein, die zum Beispiel haftvermittelnde Funktion übernehmen. Die Gesamtdicke der Polypropylenfolie inklusive der Haftvermittlerschicht beträgt 10 bis 80 μm, bevorzugt 10 bis 50 μm.

Bei der Schweißung wird eine inklusive Siegelschicht vorgefertigte Folie eingesetzt, die Siegelschicht durch zum Beispiel Heißluft oder Wärmestrahlung erweicht und dann unter Anwendung von Druck mit dem ebenfalls erwärmten Fügepartner verschweißt.

Bei der Extrusionsbeschichtung wird die Polypropylenschicht als Schmelze direkt auf die erste Trägerschicht mit einer Breitschlitzdüse aufgetragen.

Besonders vorteilhaft lässt sich die erfindungsgemäße selbstklebende Luftpolsterfolie herstellen durch folgendes Verfahren:

Aus einem Extruder kommend wird durch eine Düse der zweite Trägerfilm auf eine Übertragungswalze gegossen. Die Übertragungswalze legt den zweiten Trägerfilm auf eine Tiefziehwalze auf, in der noppenförmige Vertiefungen und in der ein Vakuumbereich vorhanden sind.

Beim Durchlaufen des Vakuumbereichs der Tiefziehwalze wird der zweite Trägerfilm in die Vertiefungen der Tiefziehwalze hineingezogen und bildet so die mit Luft gefüllten Noppen.

Unmittelbar nach Verlassen des Vakuumteils der Tiefziehwalze wird ebenfalls aus einem Extruder kommend durch eine Düse auf eine weitere Übertragungswalze der erste Trägerfilm aufgebracht und von der Übertragungswalze auf den tiefgezogenen zweiten Trägerfilm übertragen.

Schließlich wird die mit einer Selbstklebeschicht ausgerüstete Folie aus Polyethylen in einer aus zwei Walzen bestehenden Kaschierstation auf die Noppen des zweiten Trägerfilms aufgebracht, und zwar unter Anwendung von Druck, der die Luft gefüllten Noppen an der Kuppe abflacht, sie aber nicht zusammendrückt, und unter Anwendung von Hitze, indem heiße Luft mit ungefähr 180 °C über eine Heißluftdüse in den Spalt, den die Folie und der zweite Trägerfilm bei ihrer Zusammenführung bilden, geleitet wird, so dass die Folie mit den Kuppen der Noppen unlösbar verschweißt.

In einem nächsten Schritt wird in einer weiteren Kaschiereinrichtung die Polypropylenfolie unter Anwendung von Hitze, indem heiße Luft mit ungefähr 180 °C über eine Heißluftdüse in den Spalt, den die Polypropylenfolie und der erste Trägerfilm mit dem darunter befindlichen Vorprodukt bei ihrer Zusammenführung bilden, geleitet wird, so dass beide Folien unter dem Druck der Kaschierwalzen unlösbar verschweißen.

Gemäß weiteren Varianten des Herstellungsverfahrens kann die so erzeugte selbstklebende Luftpolsterfolie zur besseren Verarbeitung durch eine Perforationsstation geleitet werden, in der beispielsweise in einem Abstand von 250 mm Perforationen in der Luftpolsterfolie eingebracht werden, so dass diese von Hand abreißbar ist.

Weiter optional kann die selbstklebende Luftpolsterfolie an den Produktionskanten besäumt, in schmalere Bahnen aufgeteilt und zur Rolle gewickelt werden.

Insbesondere in dieser Form ist die erfindungsgemäße Luftpolsterfolie in der Montage von Fahrzeugherstellern ohne weitere Werkzeuge oder Vorrichtungen unmittelbar einzusetzen.

Besonders vorteilhaft lässt sich die erfindungsgemäße Luftpolsterfolie auf frisch lackierten Oberflächen von Automobilen oder Automobilteilen als Montage- und/oder Transportschutz verwenden so wie überhaupt zum Schutz von empfindlichen Lack-, Metall-, Holz-, Kunststoff- oder Glasoberflächen.

Anhand der nachfolgend beschriebenen Figuren wird die erfindungsgemäße Luftpolsterfolie in einer besonders vorteilhaften Ausführung sowie ein Verfahren zur Herstellung derselben näher erläutert, ohne damit die Erfindung unnötig einschränken zu wollen. Es zeigen

Figur 1     die erfindungsgemäße Luftpolsterfolie und

Figur 2     ein Verfahren zur Herstellung der erfindungsgemäßen Luftpolsterfolie nach Figur 1.

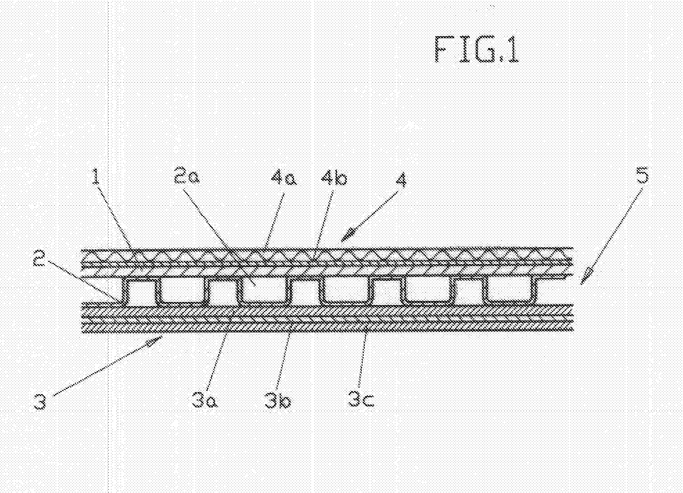

Nach Figur 1 besteht die selbstklebende Luftpolsterfolie 5 aus einem ersten Trägerfilm 1, hier eine Polyethylenfolie, auf der ein Noppen 2a bildender zweiter Trägerfilm 2 vorhanden ist, wobei die Noppen 2a mit Luft gefüllt sind. Mit den Kuppen der Noppen 2a ist eine mehrschichtige Folie 3 verbunden, wobei eine Folie aus Polyethylen 3a unlösbar auf den Kuppen der Noppen 2a aufgebracht ist. Die Polyethylenfolie 3a ist mit einer selbstklebenden Beschichtung 3c ausgerüstet, wobei zwischen Folie 3a und Kleber 3c eine Haftvermittlerschicht 3b vorhanden ist.

Polypropylenschicht 4a besteht und vermittels eines Kaschierklebers oder einer Polyethylensiegelschicht 4b mit dem ersten Trägerfilm 1 verbunden ist.

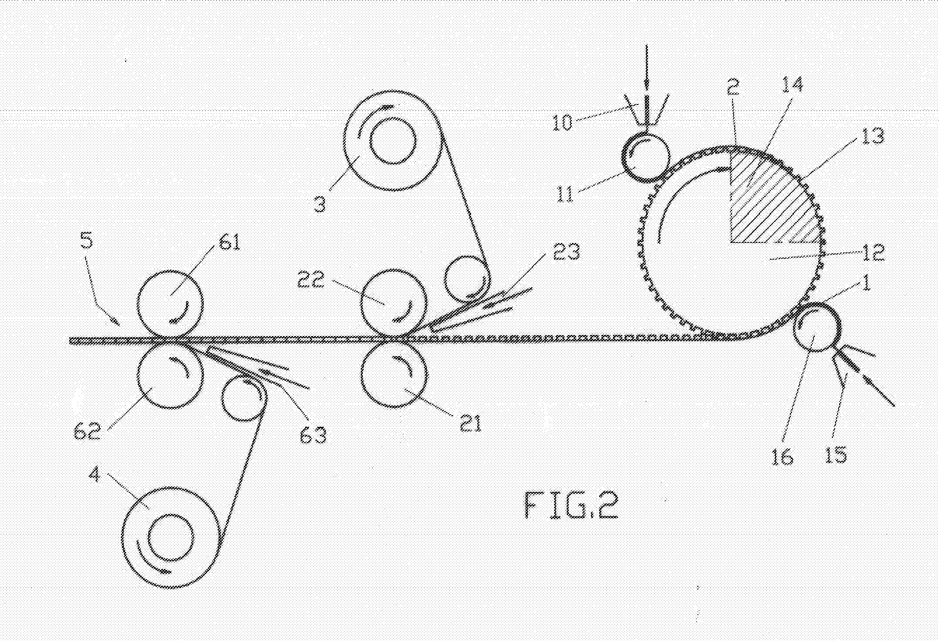

Figur 2 zeigt das Herstellungsverfahren der erfindungsgemäßen Luftpolsterfolie nach Figur 1.

Aus einem Extruder kommend wird durch eine Düse 10 der zweite Trägerfilm 2 auf eine Übertragungswalze 11 gegossen.

Die Übertragungswalze 11 legt den zweiten Trägerfilm 2 auf eine Tiefziehwalze 12 auf, in der noppenförmige Vertiefungen 13 und in der ein Vakuumbereich 14, der sich über ein Viertel der Tiefziehwalze 12 erstreckt (90°), vorhanden sind.

Beim Durchlaufen des Vakuumbereichs 14 der Tiefziehwalze 12 wird der zweite Trägerfilm 2 in die Vertiefungen 13 der Tiefziehwalze 12 hineingezogen und bildet so die mit Luft gefüllten Noppen 2a.

Unmittelbar nach Verlassen des Vakuumteils 14 der Tiefziehwalze 12 wird ebenfalls aus einem Extruder kommend durch eine Düse 15 der erste Trägerfilm 1 auf eine weitere Übertragungswalze 16 und von dieser auf den tiefgezogenen zweiten Trägerfilm 2 aufgebracht.

Danach wird die mit einer Selbstklebeschicht ausgerüstete Folie 3 aus Polyethylen in einer aus zwei Walzen 21, 22 bestehenden Kaschierstation auf die Noppen 2a des zweiten Trägerfilms 2 aufgebracht, und zwar unter Anwendung von Druck, der die Luft gefüllten Noppen 2a an der Kuppe abflacht, sie aber nicht zusammendrückt, und unter Anwendung von Hitze, indem heiße Luft mit ungefähr 180 °C über eine Heißluftdüse 23 in den Spalt, den die Folie 3 und der zweite Trägerfilm 2 bei ihrer Zusammenführung bilden, geleitet wird, so dass die Folie 3 mit den Kuppen der Noppen 2a unlösbar verschweißt.

Schließlich wird eine Außenfolie aus Polypropylen 4 in einer zweiten aus zwei Walzen 61, 62 bestehenden Kaschierstation auf die der Folie 3 abgewandten Seite aufgebracht und zwar wieder unter Anwendung von Druck und Hitze, indem heiße Luft mit ungefähr 180 °C über eine Heißluftdüse 63 in den Spalt, den die Folie 4 und die der Folie 3 abgewandte Seite bei Ihrer Zusammenführung bilden, geleitet wird, so dass die Folie 4 mit der der Folie 3 abgewandten Seite unlösbar verschweißt.

Im Folgenden soll die Erfindung anhand von Beispielen erläutert werden, ohne diese damit allerdings einschränken zu wollen.

**Beispiele**

**Beispiel 1**

Eine selbstklebende Luftpolsterfolie wurde folgendermaßen hergestellt:

Aus einem Extruder kommend wurde durch eine Breitschlitzdüse der zweite Trägerfilm aus Polyethylen mit einer Stärke von 20 $\mu$m vermittels einer Übertragungswalze auf eine Tiefziehwalze mit noppenförmigen Vertiefungen gegossen. Unmittelbar nach Verlassen des Vakuumteils der Tiefziehwalze, in dem die Folie in die Vertiefungen hineingezogen worden war, wurde ebenfalls aus einem Extruder kommend durch eine Düse über eine weitere Übertragungswalze der erste Trägerfilm, ebenfalls aus 20 $\mu$m Polyethylen, auf den tiefgezogenen zweiten Trägerfilm übertragen.

Schließlich wurde die mit der Selbstklebemasse aus Polyethylenvinylacetat ausgerüstete Folie aus Polyethylen in einer aus zwei Walzen bestehenden Kaschierstation auf die Noppen des zweiten Trägerfilms aufgebracht, und zwar unter Anwendung von Druck, der die Luft gefüllten Noppen an der Kuppe abflachte, sie aber nicht zusammendrückte, und unter Anwendung von Hitze, indem heiße Luft mit ungefähr 180 °C über eine Heißluftdüse in den Spalt, den die Folie und der zweite Trägerfilm bei ihrer Zusammenführung bildeten, geleitet wurde, so dass die Folie mit den Kuppen der Noppen unlösbar verschweißte.

In einem nächsten Schritt wurde in einer weiteren Kaschiereinrichtung eine Polypropylenfolie bestehend aus 50 Gewichtsteilen Polypropylenhomopolymer mit einem MFR von 8,0 g/10 min (230 °C; 2,16 kg) und einem Schmelzpunkt von ca. 164 °C, 50 Gewichtsteilen Polypropylenblockcopolymer mit einem MFR von 5,0 g/10 min (230 °C; 2,16 kg) und einem Schmelzpunkt von ca. 160 °C zusammen mit 0,4 Gewichtsteilen eines primären Antioxidans (Irganox 1010, Ciba), die mit einer ca. 5 Mikrometer dicken Schicht aus Low Density Polyethylen mit einem MFR von 2,0 g/10 min (190 °C; 2,16 kg) und einer Dichte von 927 kg/m$^3$ so coextrudiert war, dass eine Gesamtdicke von 30 Mikrometer resultierte, unter Anwendung von Hitze, indem heiße Luft mit ungefähr 180 °C über eine Heißluftdüse in den Spalt, den die Polypropylenfolie und der erste Trägerfilm mit dem darunter befindlichen Vorprodukt bei ihrer Zusammenführung bilden, geleitet wurde, so dass beide Folien unter dem Druck der Kaschierwalzen unlösbar verschweißten.

Das Produkt wurde auf Pappkernen zu 30 m langen Rollen in je 20 cm Breite aufgewickelt.

**Beispiel 2**

Eine Luftpolsterfolie wie in Beispiel 1, wobei die Polypropylenfolie abweichend zusätzlich 20 Gewichtsteile eines Linear Low Density Polyethylens mit 1-Buten als Comonomer mit einem MFR von 1,2 g/10 min (190 °C; 2,16 kg) und einer Dichte von 919 kg/m$^3$ enthielt.

**Beispiel 3**

Eine Luftpolsterfolie wie in Beispiel 1, wobei die Polypropylenfolie abweichend aus 55 Gewichtsteilen Polypropylenblockcopolymer mit einem MFR von 5,0 g/10 min (230 °C; 2,16 kg) und einem Schmelzpunkt von ca. 160 °C und 45 Gewichtsteilen eines Linear Low Density Polyethylens mit 1-Buten als Comonomer mit einem MFR von 1,2 g/10 min (190 °C; 2,16 kg) und einer Dichte von 919 kg/m$^3$ enthielt.

**Beispiel 4**

In diesem Fall wurde die Luftpolsterfolie ohne aufgeschweißte Polypropylenfolie gefahren und zu einem Ballen in voller Bahnbreite gewickelt. Um ein Verblocken des Materials zu vermeiden, wurde innerhalb von 24 h nach der Extrusion eine Kaschierung mit einer einseitig mit Coronaentladung vorbehandelte Polypropylenfolie in einer Dicke von 20 Mikrometer bestehend aus 50 Gewichtsteilen Polypropylenhomopolymer mit einem MFR von 8,0 g/10 min (230 °C; 2,16 kg) und einem Schmelzpunkt von ca. 164 °C, 50 Gewichtsteilen Polypropylenblockcopolymer mit einem MFR von 5,0 g/10 min (230 °C; 2,16 kg) und einem Schmelzpunkt von ca. 160 °C zusammen mit 0,4 Gewichtsteilen eines primären Antioxidans (Irganox 1010, Ciba), vorgenommen. Dazu wurde die vorbehandelte Seite mit einer Oberflächenenergie von mehr als 40 mN/m mit einem lösemittelhaltigen PU Kaschierkleber (100 Teile Adcote 545-75EA gemischt mit 13 Teilen Catalyst F, Rohm and Haas) so beschichtet, dass nach dem Abdunsten des Lösemittels in einem Kanaltrockner ein Kleberauftrag von 2 g/m$^2$ resultierte. An der Kaschierstation wurde die Luftpolsterfolie nach einer Coronavorbehandlung der ersten Trägerfolie auf eine Oberflächenenergie von über 40 mN/m mit der kleberbeschichteten Folie zusammenkaschiert und zu Ballen gewickelt.

Das Material wurde eine Woche lang zum Aushärten des Kaschierklebers bei 40 °C gelagert und dann auf Pappkernen zu 30 m langen Rollen in 20 cm Breite konfektioniert.

**Gegenbeispiel 1**

Wie Beispiel 1 bis 3, nur dass keine Polypropylenfolie aufgeschweißt oder zukaschiert wurde. Die Luftpolsterfolie wurde direkt im Anschluss an die Extrusion zu 30 m langen Rollen in 20 cm Breite konfektioniert.

**Gegenbeispiel 2**

Wie Beispiel 3, nur dass 40 Gewichtsteile Polypropylenblockcopolymer mit einem MFR von 5,0 g/10 min (230 °C; 2,16 kg) und einem Schmelzpunkt von ca. 160 °C und 60 Gewichtsteile eines Linear Low Density Polyethylens mit 1-Buten als Comonomer mit einem MFR von 1,2 g/10 min (190 °C; 2,16 kg) und einer Dichte von 919 kg/m$^3$ für die Polypropylenfolie verwendet wurden.

**Prüfkriterien**

Geprüft wurde die Abwickelbarkeit, ob sich die Luftpolsterfolie ohne Verdehnung, Delamination oder Zerstörung der Noppen abwickeln ließ, nachdem die Rolle durch Lagerung bei erhöhter Temperatur (6 Wochen bei 40 °C) künstlich gealtert worden war.

*Prüfung auf Abwickelbarkeit*

Dazu wurden die Rollen in eine Rollenhalterung um die Kernachse frei drehbar eingesetzt und dann die Rollen durch einen Prüfer per Hand mit wechselnden praxisrelevanten Abwickelgeschwindigkeiten von einigen Metern pro Minute bis zu ca. 40 m pro Minute über die vollen 30 m bis zum Ende abgewickelt. Die Abwickelbarkeit galt dabei als

- anwendungsgerecht, wenn die selbstklebende Luftpolsterfolie ohne Verdehnen, Delamination oder Zerstörung der Noppen und mit moderater Geräuschentwickelung abwickelbar war,
- nicht anwendungsgerecht, wenn die selbstklebende Luftpolsterfolie beim Abwickeln verdehnte, delaminierte oder unter Zerstörung der Noppen und dabei ein laut ratterndes Geräusch erzeugte.

Die Ergebnisse sind in Tabelle 1 zusammengefasst:

| Muster | Abwickelbarkeit anwendungsgerecht? |
|---|---|
| **Beispiel 1** | Ja |
| **Beispiel 2** | Ja |
| **Beispiel 3** | Ja |
| **Beispiel 4** | Ja |
| **Gegenbeispiel 1** | Nein |
| **Gegenbeispiel 2** | Nein |

Schmelzindex

Der Schmelzindex "Melt Flow Ratio" (MFR) wird nach ISO 1133 bei der angegebenen Temperatur mit 2,16 kg geprüft und in g/10 min ausgedrückt.

**Patentansprüche**

1. Selbstklebende Luftpolsterfolie insbesondere zum temporären Schutz von frischen Lackoberflächen von Fahrzeugen wie Automobilen und frisch lackierten Fahrzeugteilen mit einem ersten Trägerfilm, auf dessen erste Seite eine Außenfolie aus Polypropylen, polypropylendominierten Polyolefinblends oder propylendominierten Olefincopolymeren aufgebracht ist und auf dessen zweite, der ersten entgegengesetzte Seite ein Noppen bildender zweiter Trägerfilm vorhanden ist, wobei die Noppen insbesondere mit Luft gefüllt sind, auf die Noppen zumindest partiell eine Folie aus Polyethylen unlösbar aufgebracht und auf der Folie eine Selbstklebeschicht aufgebracht ist.

2. Selbstklebende Luftpolsterfolie nach Anspruch 1,
**dadurch gekennzeichnet, dass**
die Außenfolie aus Polypropylen eine der ersten Trägerschicht zugewandte Siegelschicht aus Polyethylen oder modifiziertem Polyethylen aufweist.

3. Selbstklebende Luftpolsterfolie nach Anspruch 1 oder 2,
**dadurch gekennzeichnet, dass**
die Außenfolie aus Polypropylen mindestens 50 Gew.-% Polypropylen, wenn sie aus einem Blend von Polyolefinen besteht, mindestens 50 Mol-% Propylen, wenn es sich um Olefincopolymere handelt, und mindestens 50 Mol-% Propylen, wenn es sich um ein Blend aus Olefincopolymeren oder Olefincopolymeren und Olefinhomopolymeren handelt, enthält.

4. Selbstklebende Luftpolsterfolie nach zumindest einem der Ansprüche 1 bis 3,
**dadurch gekennzeichnet, dass**
die Außenfolie und die Siegelschicht durch Coextrusion hergestellt worden sind.

5. Selbstklebende Luftpolsterfolie nach mindestens einem der vorhergehenden Ansprüche, **dadurch gekennzeichnet, dass**
zwischen der Außenfolie aus Polypropylen und der Siegelschicht eine oder mehrere weitere Folien aufgebracht sind, insbesondere hergestellt durch Coextrusion.

6. Selbstklebende Luftpolsterfolie nach mindestens einem der vorhergehenden Ansprüche, **dadurch gekennzeichnet, dass**
zwischen der Folie und der Kleberschicht eine Haftvermittlerschicht vorhanden ist.

7. Selbstklebende Luftpolsterfolie nach mindestens einem der vorhergehenden Ansprüche, **dadurch gekennzeichnet, dass**
die Außenfolie, der erste Trägerfilm, der zweite Trägerfilm und/oder die Folie mindestens ein Lichtschutzmittel in einer Menge von mindestens 0,15 Gew.-% und/oder Titandioxid, vorzugsweise in einer Menge von 5 bis 15 Gew.-%, enthalten.

8. Selbstklebende Luftpolsterfolie nach mindestens einem der vorhergehenden Ansprüche, **dadurch gekennzeichnet, dass**
der erste und/oder der zweite Trägerfilm einen dreischichtigen Aufbau aus Polyethylenfolie/Sperrschicht/Polyethylenfolie aufweist.

9. Selbstklebende Luftpolsterfolie nach mindestens einem der vorhergehenden Ansprüche, **dadurch gekennzeichnet, dass**
der erste Trägerfilm aus Polyolefinen besteht wie Polyethylen, Polypropylen sowie deren Mischungen oder Copolymeren.

10. Selbstklebende Luftpolsterfolie nach mindestens einem der vorhergehenden Ansprüche, **dadurch gekennzeichnet, dass**
die Selbstklebemasse aus Polyethylenvinylacetat bei einem Vinylacetatgehalt von 40 Gew.-% bis 80 Gew.-%, insbesondere 70 Gew.-% besteht, wobei die Selbstklebemasse eine Verlustwinkel tan $\delta$ von 0,6 bis 1,0, gemessen bei einer Temperatur von 60 °C und einer Frequenz von $10^{-2}$ Hz, und von 0,4 bis 0,7, gemessen bei einer Temperatur von 60 °C und einer Frequenz von 10 Hz, aufweist.

11. Selbstklebende Luftpolsterfolie nach mindestens einem der vorhergehenden Ansprüche, **dadurch gekennzeichnet, dass**
die Selbstklebeschicht mit einem oder mehreren Additiven abgemischt ist wie Klebrigmachern, Weichmachern, anorganischen oder organischen Füllstoffen, Pigmenten, Lichtschutzmitteln, vorzugsweise in Form von UV-absorbierenden sterisch gehinderten Aminen (HALS), Alterungsschutzmitteln, vorzugsweise in Form von Lactonen, primären und sekundären Antioxidantien, Vernetzungsmitteln und/oder Vernetzungspromotoren.

12. Selbstklebende Luftpolsterfolie nach mindestens einem der vorhergehenden Ansprüche, **dadurch gekennzeichnet, dass**
die Luftpolsterfolie insbesondere in regelmäßigen Abständen perforiert ist, bevorzugt quer zur Längsrichtung.

13. Verfahren zur Herstellung einer selbstklebenden Luftpolsterfolie nach mindestens einem der vorhergehenden Ansprüche,
**dadurch gekennzeichnet, dass**
aus einem Extruder kommend durch eine Düse der zweite Trägerfilm auf eine Übertragungswalze gegossen werden, die Übertragungswalze den zweiten Trägerfilm auf eine Tiefziehwalze auflegt, in der Tiefziehwalze noppenförmige Vertiefungen und ein Vakuumbereich vorhanden sind,
beim Durchlaufen des Vakuumbereichs der Tiefziehwalze der zweite Trägerfilm in die Vertiefungen der Tiefziehwalze hineingezogen wird und so die Noppen bildet,
unmittelbar nach Verlassen des Vakuumteils der Tiefziehwalze ebenfalls aus einem eines Extruder kommend durch eine Düse der erste Trägerfilm auf eine weitere Übertragungswalze und von dieser auf den tiefgezogenen zweiten Trägerfilm aufgebracht wird,
die mit einer Selbstklebeschicht ausgerüstete Folie aus Polyethylen in einer aus Walzen, vorzugsweise zwei, bestehenden Kaschierstation auf die Noppen des zweiten Trägerfilms aufgebracht wird, und zwar unter Anwendung von Druck, der die Luft gefüllten Noppen an der Kuppe abflacht, sie aber nicht zusammendrückt, und unter Anwendung von Hitze, indem heiße Luft mit ungefähr 180 °C über eine Heißluftdüse in den Spalt, den die Folie und der zweite Trägerfilm bei ihrer Zusammenführung bilden, geleitet wird, so dass die Folie mit den Kuppen der Noppen unlösbar verschweißt,
in einer weiteren Kaschiereinrichtung die Außenfolie aus Polypropylen unter Anwendung von Hitze, indem heiße Luft mit ungefähr 180 °C über eine Heißluftdüse in den Spalt, den die Außenfolie und der erste Trägerfilm mit dem darunter befindlichen Vorprodukt bei ihrer Zusammenführung bilden, geleitet wird, so dass beide Folien unter dem Druck der Kaschierwalzen unlösbar verschweißen.

14. Verwendung einer Luftpolsterfolie nach zumindest einem der vorhergehenden Ansprüche auf frisch lackierten Oberflächen von Automobilen oder Automobilteilen als Montage- und/oder Transportschutz.

15. Verwendung einer Luftpolsterfolie nach zumindest einem der vorhergehenden Ansprüche zum Schutz von empfindlichen Lack-, Metall-, Holz-, Kunststoff- oder Glasoberflächen.

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19532220 A1
- DE 10050499 A1
- US 6093466 B
- DE 102004036417 A1
- DE 102007009753 A1
- DE 19954700 A1
- DE 10303537 A1
- DE 10050449 A1